# EUROPEAN PATENT SPECIFICATION

(11) **EP 2 843 023 B1**
(45) Date of publication and mention of the grant of the patent: **06.09.2017**
(21) Application number: 13781011.5
(22) Date of filing: 25.04.2013
(51) Int. Cl.: C09K 3/10, C08J 9/10

(54) **SEALING MATERIAL**
DICHTUNGSMATERIAL
MATÉRIAU D'ÉTANCHÉITÉ

(30) Priority: 26.04.2012 JP 2012101172
(43) Date of publication of application: 04.03.2015
(73) Proprietor: Bridgestone Corporation, Tokyo 104-8340 (JP)
(72) Inventor: OTSUKA, Masaru, Yokohama-shi Kanagawa 244-0812 (JP); SEKI, Katsuya, Yokohama-shi Kanagawa 244-0812 (JP); YAMAMOTO, Tomohiro, Yokohama-shi Kanagawa 244-0812 (JP); ITOYAMA, Tsuyoshi, Yokohama-shi Kanagawa 244-0812 (JP)
(74) Representative: Oxley, Robin John George
(86) International application number: PCT/JP2013/062161
(87) International publication number: WO 2013/161920

(56) References cited:
- WO-A1-2011/007788
- JP-A- 2004 027 027
- JP-A- 2011 252 125

## Description

### TECHNICAL FIELD

The present invention relates to a sealing material for placing between members and carrying out sealing. The invention relates in particular to a sealing material which uses a rubber foam having a low hardness and a low density, and moreover having a small cell diameter and excellent sealing properties.

### BACKGROUND ART

In structures such as buildings, vehicles and electronic equipment, various treatments such as water-stopping, heat-insulating and sound-absorbing treatment have hitherto been carried out by filling gaps between individual members with sealing materials. Synthetic resin or rubber foams are generally used as such sealing materials. Because foam has a suitable rebound (stress under compression, or "compressive stress"), with the mere application of a small compressive deformation, it can conform and tightly adhere to surface irregularities in the materials being sealed, and thus is able to impart excellent sealing properties.

Of such foams, owing to their excellent weather resistance, heat resistance and sealing properties, rubber foams obtained by the expansion of an ethylene-α-olefin-diene copolymer rubber with a foaming agent such as azodicarbonamide are advantageously used as sealing materials (Patent Documents 1 and 2). Because rubber foams have a small cell diameter and a suitable expansion ratio and compressive stress, they are effective for enhancing the performance attributes (e.g., water-stopping ability, heat-insulating ability, sound-insulating ability) desired of foams. Hence, in rubber foams, regulation of the cell size is carried out by the use of, for example, stearic acid and calcium oxide (Patent Document 3). WO2011007788 teaches a sealing material obtained by vulcanizing and foaming a mixture comprising a rubber ingredient comprising a copolymer rubber formed from ethylene, an α-olefin having 3 or more carbons and an unconjugated diene, a vulcanizing agent, a blowing agent and a thermoplastic resin having a melting point of 80°C or lower. JP2011252125 teaches a sealing material consisting of a vulcanized foam of a rubber composition comprising a rubber component, a vulcanizing agent, a foaming agent, 7-15 pts by mass of calcium oxide, 3-5 pts by mass stearic acid, 3-5 parts by mass zinc stearate. JP2004027027 discloses a rubber composition containing an ethylene α-olefin copolymer rubber and a foaming agent having a median grain size of ≤10 µm.

### PRIOR-ART DOCUMENTS

### PATENT DOCUMENTS

Patent Document 1: JP-A 2000-313762
Patent Document 2: JP-A 2001-64429
Patent Document 3: JP-A 11-80405

### SUMMARY OF THE INVENTION

### PROBLEMS TO BE SOLVED BY THE INVENTION

From the standpoint of achieving lower hardness and lower cost, there is a desire for sealing materials made of rubber foam to have a lower density. To achieve a lower density, it is generally necessary to add a larger amount of foaming agent and thereby raise the expansion ratio. However, in cases where a lot of foaming agent has been included, the cell diameter becomes larger and the sealing performance such as water-stopping ability decreases. In order to make the cell diameter smaller, compounds such as stearic acid, zinc stearate and calcium stearate are used as cell regulators, but when such compounds are added in a large amount, the vulcanization rate slows down. With this decrease in the vulcanization rate, the rubber foam that forms has a low hardness, yet a sufficient rubber viscosity (e.g., Mooney viscosity) cannot be ensured and trapping the gas that evolves is not easy, making it difficult to obtain a low-density rubber foam. Hence, in the prior art, it has been difficult to reconcile the following three conflicting aims in sealing materials: achieving a lower density, increasing the sealing properties by finely regulating the cell diameter, and achieving a lower hardness.

Accordingly, the object of this invention is to provide a sealing material having a low hardness and a low density, and having also a small cell diameter and excellent sealing properties.

### MEANS FOR SOLVING THE PROBLEMS

The sealing material of the invention is a sealing material which is obtained by vulcanizing and expanding an intimate mixture that includes a rubber component containing a copolymeric rubber of ethylene, an α-olefin having 3 or more carbon atoms and a non-conjugated diene, a vulcanizing agent, a foaming agent and a thermoplastic resin, and which is characterized both in that the intimate mixture includes from 2 to 4 parts by weight of stearic acid and from 5 to 7 parts by weight of calcium oxide per 100 parts by weight of the rubber component, and also in that the sealing material has a stress under 50% compression of 100 kPa or less.

The ratio of the parts by weight of stearic acid to the parts by weight of calcium oxide is from 0.5 to 0.75.

It is preferable for the thermoplastic resin to have a melting point of from 50 to 75°C.

It is preferable for the thermoplastic resin to be an ethylene-vinyl acetate copolymer.

It is preferable for the ethylene-vinyl acetate copolymer to have a vinyl acetate content of from 25 to 35 wt %.

It is preferable for the content of the thermoplastic resin to be from 1 to 40 parts by weight per 100 parts by weight of the rubber component.

It is preferable for the intimate mixture to have a Mooney viscosity of from 10 to 20.

It is preferable for the foaming agent to be azodicarbonamide.

### ADVANTAGEOUS EFFECTS OF THE INVENTION

Generally, closed-cell rubber foams, owing to small compressive deformations, conform to irregularities in the faces being sealed and are thus able to exhibit excellent sealing properties. However, compared with an open-cell rubber foam, because a closed-cell rubber foam is not subjected to foam-breaking treatment, it has a high stress under compression, leading to a decrease in the sealing properties due to deformation at the faces being sealed or a worsening in the ease of assembly of the sealed members. By contrast, the sealing material of this invention, through a combination of various types of compounding ingredients, is able to achieve a lower sealing material density, improved sealability due to fine control of the cell diameter, and a lower hardness.

That is, in this invention, by using 5 to 7 PHR (5 to 7 parts by weight per 100 parts by weight of the rubber component) of calcium oxide, it is possible to ensure the rubber viscosity necessary for lowering both the density and hardness of the foam. Adding calcium oxide optimizes the rubber viscosity and enables both a lower density and a lower hardness to be achieved, yet the cells end up becoming coarse (large in size). Hence, this invention makes the cells finer by adding from 2 to 4 PHR of stearic acid. Moreover, with the addition of stearic acid, a vulcanization retarding effect occurs, lowering the rubber viscosity and enabling a lower hardness to be achieved. In this way, the invention achieves a lower density, fine control of the cell diameter, and a lower hardness in the sealing material.

### DETAILED DESCRIPTION OF THE DRAWINGS

[Fig. 1]

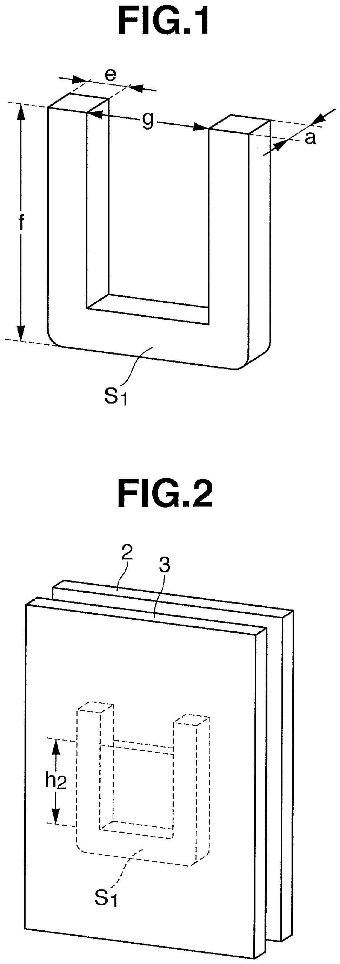

   FIG. 1 is a perspective view of a U-shaped sample used for evaluating the water-stopping ability.
[Fig. 2]
   FIG. 2 schematically illustrates a U-shaped test method for evaluating the water-stopping ability.

### EMBODIMENT FOR CARRYING OUT THE INVENTION

The sealing material of the invention is a sealing material which is obtained by vulcanizing and expanding an intimate mixture that includes a rubber component containing a copolymeric rubber of ethylene, an α-olefin having 3 or more carbon atoms and a non-conjugated diene, a vulcanizing agent, a foaming agent and a thermoplastic resin, and which is characterized both in that the intimate mixture includes from 2 to 4 parts by weight of stearic acid and from 5 to 7 parts by weight of calcium oxide per 100 parts by weight of the rubber component and also in that the sealing material has a stress under 50% compression of 100 kPa or less and wherein the ratio of the parts by weight of stearic acid to the parts by weight of calcium oxide is from 0.5 to 0.75.

### [Rubber Component]

The rubber component includes at least an ethylene-α-olefin-diene copolymeric rubber. The ethylene-α-olefin-diene copolymeric rubber is a copolymer of ethylene, α-olefin and a non-conjugated diene.

The α-olefin is an α-olefin having 3 or more carbons. Illustrative examples include propylene, 1-butene, 4-methyl-1-pentene, 1-hexene, 1-octene, 1-decene, 1-dodecene, 1-tetradecene, 1-hexadecene, 1-octadecene and 1-eicosene. The use of propylene is especially preferred.

Illustrative examples of non-conjugated dienes include 1,4-hexadiene, 1,6-octadiene, 1,7-octadiene, 1,8-nonadiene, 1,9-decadiene, 2-methyl-1,5-hexadiene, 6-methyl-1,5-hexadiene, 7-methyl-1,6-octadiene, cyclohexadiene, dicyclopentadiene, methyl tetrahydroindene, 5-vinyl-2-norbornene, 5-ethylidene-2-norbornene and 5-methylene-2-norbornene. Of these, 5-ethylidene-2-norbornene is preferred.

The ethylene-α-olefin-diene copolymeric rubber is preferably an ethylene-propylene-diene copolymeric rubber (EPDM). The content of non-conjugated diene in EPDM is preferably from 3 to 20 wt %, and most preferably from 5 to 15 wt %. If the content of non-conjugated diene in EPDM is too low, sufficient crosslinks do not form; if it is too high, the vulcanization rate becomes fast and a lower density is difficult to achieve. By using such an EPDM, it is possible to suppress a decline over time in the compressive stress of the sealing material.

The ethylene-α-olefin-diene copolymeric rubber is preferably included in an amount of at least 60 wt %, and in particular at least 85 wt %, based on the total amount of the rubber component. It is possible in this way to suppress a decline over time in the compressive stress of the sealing material.

Examples of rubber ingredients other than ethylene-α-olefin-diene copolymeric rubber that may be used include ethylene-propylene rubber (EPM) and butyl rubber (IIR), and also isoprene rubber (IR), natural rubber (NR), styrene-butadiene rubber (SBR), butadiene rubber (BR), 1,2-polybutadiene (RB), acrylic rubber (ACM, ANM), chlorosulfonated polyethylene (CSM), chloroprene rubber (CR) and silicone rubber. Of these, EPM and IIR are preferred.

### [Thermoplastic Resin]

A thermoplastic resin having a melting point of 80°C or below is preferred as the thermoplastic resin. A thermoplastic resin having a melting point of 80°C or below can bleed out onto the surface of the sealing material over time, as a result of which the surface of the sealing material manifests tight adherence to the faces being sealed. In addition, when rebound of the sealing material occurs, the tight adherence between the sealing material surface and the faces being sealed can be further increased. Such bleedout of the thermoplastic resin is particularly accelerated under a high temperature atmosphere of 60°C or more. Therefore, even if the compressive stress decreases due to deterioration of the sealing material, tight adherence between the sealing material and the faces being sealed can be ensured, enabling excellent sealing properties to be maintained over a long period of time. Also, because the thermoplastic resin has not yet bled out at the time the sealing material is attached, repositioning can easily be carried out, thus ensuring also the ease of working with the sealing material. Furthermore, the sealing material of the invention, because there is no need to newly apply to the rubber foam surface an adhesive layer or the like for increasing adherence to the faces being sealed, also has an excellent productivity.

In sealing materials made of prior-art rubber foams, a thermoplastic resin such as EVA is sometimes used for such purposes as enhancing strength. However, the bleedout of the ingredients included in the sealing material has hitherto been regarded as undesirable; hence, the thermoplastic resins used in conventional rubber foams generally having a melting point greater than 80°C. The above-described effects of the invention cannot be achieved with such sealing materials.

Therefore, the thermoplastic resin has a melting point of preferably not more than 80°C, more preferably from 50 to 75°C, and most preferably from 60 to 70°C. The melting point of the thermoplastic resin is a value measured by differential scanning calorimetry (DSC) in accordance with JIS K 6924-2.

Examples of thermoplastic resins having a melting point of 80°C or less that can be used as the thermoplastic resin in this invention include low-density polyethylenes, ethylene-vinyl acetate copolymer resins, ethylene-acrylic acid copolymer resins, ethylene-ethyl acrylate copolymer resins, ethylene-methyl acrylate copolymer resins and ethylene-methacrylic acid copolymer resins. Of these, an ethylene-vinyl acetate copolymer resin (EVA) is especially preferred. When the EVA bleeds out onto the surface of the sealing material, the sealing material exhibits an excellent adhesion without staining the faces being sealed, thus enabling the seal durability of the sealing material to be further enhanced. Moreover, because the EVA has water repellency and can form a film on the surface of the sealing material, it is possible also to improve the water-stopping sealability of the sealing material.

For the EVA to have a melting point of 80°C or less and to be capable of bleeding out onto the surface of the sealing material, it is preferable that the EVA have a suitable melt flow rate (MFR) and a suitable vinyl acetate content.

The melt flow rate of the EVA is preferably from 1 to 2,000 g/10 min, more preferably from 10 to 500 g/10 min, and most preferably from 30 to 400 g/10 min. The MFR of the EVA is a value measured in accordance with JIS K 6924-1 at 190°C and under a load of 21.18 N.

The vinyl acetate content of the EVA is preferably from 10 to 50 wt %, more preferably from 15 to 35 wt %, and most preferably from 25 to 35 wt %. The vinyl acetate content of the EVA is a value measured in accordance with JIS K 6924.

The thermoplastic resin content is preferably from 1 to 40 parts by weight, and especially from 1 to 30 parts by weight, per 100 parts by weight of the rubber component (PHR). A thermoplastic resin content in excess of 40 parts by weight may lead to decreases in the kneadability and processability, an increase in the cell diameter and a decrease in the compressive stress of the foam. On the other hand, at less than 1 part by weight, the thermoplastic resin may be incapable of sufficiently bleeding out.

### [Vulcanizing Agent]

Examples of vulcanizing agents include sulfur and sulfur compounds, zinc white, selenium, magnesium oxide and organic peroxides. From the standpoint of the heat resistance and seal durability of the foam, using at least sulfur is preferred.

The content of the vulcanizing agent is preferably from 1 to 30 parts by weight, and especially from 1 to 5 parts by weight, per 100 parts by weight of the rubber component (PHR).

In this invention, "vulcanization" is not limited to crosslinking with sulfur, and is used here synonymously with "crosslinking."

### [Foaming agent]

The foaming agent is not used only to generate gas for expansion, and also has a vulcanization adjusting action on the rubber component. Illustrative examples include N,N'-dinitrosopentamethylenetetramine (DPT), azodicarbonamide (ADCA), 4,4'-oxybisbenzenesulfonyl hydrazide (OBSH) and sodium bicarbonate. Of these, from the standpoint of the heat resistance and seal durability of the foam, the use of ADCA is especially preferred.

The content of the foaming agent is preferably from 5 to 40 parts by weight, and especially from 10 to 30 parts by weight, per 100 parts by weight of the rubber component.

### [Calcium Oxide]

Calcium oxide reacts with moisture in the rubber mixture and has an expansion-retarding effect, as a result of which a lower density and lower hardness in the foam can be achieved. When a large amount of calcium oxide is included, on account of the dehydrating action thereof, the vulcanizing reactions occur before the foaming reactions. When a small amount of calcium oxide is included, the vulcanization regulating function due to this dehydrating action weakens. Therefore, calcium oxide acts as more than simply a dehydrating agent; it also acts as a vulcanization regulator, and additionally has the function of controlling the density of the sealing material. On account of this, the amount of calcium oxide included in the rubber mixture is from 5 to 7 PHR. When the calcium oxide is included in an amount of more than 7 PHR, the density of the sealing material becomes too high. On the other hand, when the amount of calcium oxide included is less than 5 PHR, the diameter of the cells becomes too large, giving the sealing material an inadequate water-stopping ability.

### [Stearic Acid]

Stearic acid has a vulcanization retarding action and a cell diameter regulating action. As a result, it acts to lower the rubber viscosity and make the cell diameter smaller. Also, when the rubber viscosity decreases, the amount of trapped gases decreases, the expansion ratio becomes smaller and the density of the sealing material rises. Hence, the stearic acid content in the rubber mixture is set to from 2 to 4 PHR.

The actions and effects of stearic acid and calcium oxide overlap somewhat and also work against each other. Hence, the amounts of stearic acid and calcium oxide included, rather than being independently set, are preferably set while taking into account the balance between these two compounds. In this invention, the ratio expressed as "stearic acid content (PHR)/calcium oxide content (PHR)" is set to 0.5 to 0.75. At a ratio outside the range of 0.5 to 0.75, the number of cells becomes smaller and the water-stopping ability worsens.

### [Other Ingredients]

The intimate mixture used to obtain the sealing material of the invention may additionally include other additives according to the intended use. For example, to accelerate vulcanization, use may be made of a thiazole-type, dithiocarbamate-type, thiourea-type, dithiophosphite-type or thiuram-type vulcanization accelerator, and of a vulcanization co-accelerator such as lauric acid or zinc oxide (activated zinc white).

Use can also be made of resin softeners such as paraffin oil, paraffin wax, blown asphalt, polybutene and rosin; fillers such as calcium carbonate and magnesium carbonate, silicic acid and salts thereof, talc, clay, mica powder, bentonite, carbon black, silica, aluminum hydroxide, magnesium hydroxide, alumina, aluminum silicate, acetylene black, aluminum powder, ceramic fibers, glass fibers, wood dust and fiber scrap; co-foaming agents such as urea and derivatives thereof, antidegradants and antioxidants, pigments and colorants, and mildewproofing agents. One, two or more of these additives may be added as needed. Carbon black may also be used as a reinforcing agent.

### [Method of Manufacture]

The sealing material of the invention can be obtained by kneading together the above-described compounding ingredients, forming the resulting blend to the desired shape, then vulcanizing and expanding the formed body. The sealing material thus obtained is made of a rubber foam having a closed-cell structure.

To prepare the sealing material, first the compounding ingredients other than the foaming agent, co-foaming agent, vulcanizing agent and vulcanizing aids are kneaded together. Kneading may be carried out by a closed-type mixer such as a Banbury mixer, a kneader or an intermix mixer, or using an open-type mixer such a roll mill. Kneading is preferably carried out at a temperature of from 80 to 170°C, and especially from 90 to 140°C, for a period of from 2 to 20 minutes. Next, the foaming agent, co-foaming agent, vulcanizing agent and vulcanizing aids are added to the kneaded material and kneaded. The latter kneading step is preferably carried out at from 40 to 90°C, and especially from 50 to 80°C, for a period of from 5 to 30 minutes. It is preferable for this kneaded material to have a Mooney viscosity of from 10 to 20 (at 100°C, ML₁₊₄). The kneaded material thus obtained is formed into a sheet or other desired shape with a calendaring machine, an extruder or the like.

The kneaded material that has been formed into a desired shape is introduced into a vulcanizer and is vulcanized and expanded by heating at from 130 to 270°C, and especially from 140 to 200°C, for a period of from 1 to 90 minutes. A rubber foam having a closed-cell structure is thereby obtained. Heating means that may be used as the heating method in the vulcanizer include a hot air vulcanization (HAV) tank, a glass bead fluidized bed, a microwave vulcanizer (UHF), and steam. Vulcanization and expansion may be carried out simultaneously or may be carried out successively under different temperature conditions.

In vulcanization and expansion, the expansion ratio (ratio of density before and after expansion) of the rubber foam is set to preferably from 5 to 30, and especially from 10 to 20. In this way, a rubber foam having a suitable mechanical strength is obtained.

The sealing material obtained by vulcanization and expansion has a closed-cell structure. The cells in the sealing material having a closed-cell structure are very small and exist in a high density. Therefore, the rubber foam has excellent characteristics, including water-stopping ability, sound-insulating ability and heat-insulating ability.

The average diameter of the cells in the sealing material is from 125 to 2,500 µm, and especially from 167 to 500 µm. This average cell diameter is a value measured in accordance with ASTM D3576-77.

The number of cells in sealing materials is generally from 10 to 200 cells/25 mm, and especially from 50 to 150 cells/25 mm. In this invention, the number of cells in the sealing material is preferably from 80 to 120 cells/25 mm, and especially from 90 to 120 cells/25 mm. Here, the number of cells refers to the number of cells per 25 mm (1 inch) of foam as set forth in JIS K 6767 (1999).

It is desirable for the sealing material to have a stress under 50% compression in the thickness direction and at 25°C which is from 0.5 to 100 kPa, preferably from 45 to 70 kPa, and most preferably from 45 to 65 kPa. At a low stress under 50% compression, the water-stopping performance as a sealing material decreases. On the other hand, if the stress under 50% compression is too high, the ease of assembly generally worsens, although this varies depending on the application. The stress under 50% compression is the value measured in accordance with JIS K 6767.

It is desirable for the density (weight/volume) of the sealing material to be from 50 to 115 kg/cm³, preferably from 85 to 115 kg/m³, and most preferably from 100 to 115 kg/m³. Such a sealing material, because the small cells are highly dispersed, has a low density and is excellent also in terms of cost. The density is the value measured in accordance with the method set forth in JIS K 7222.

The sealing material has a tensile strength at 300% elongation in the lengthwise direction of from 50 to 500 kPa, and especially from 150 to 250 kPa. The tensile strength is the value measured in accordance with JIS K 6767 (Method A).

The sealing material of this invention is capable of ensuring excellent adherence over an extended period of time between the surface of the rubber foam and the faces being sealed. In particular, such effects are exhibited over long-term use at high temperatures (60°C and above) and over long-term use in environments that cycle between high temperatures (60°C and above) and low temperatures (30°C and below). Such sealing materials can be advantageously used for sealing gaps between components in, for example, vehicles (e.g., window dams); electrical equipment such as air conditioners, washing machines, refrigerators and vending machines; acoustic equipment; construction applications (e.g., exterior wall joints, sashes, roofing connections); household equipment such as kitchen devices, the combination toilet-baths known as "unit baths," and hot water heaters; and public works applications, such as joints in buildings, roads and bridges, and water conduit connections. The sealing material can also be used as, for example, dustproofing materials, thermal insulation, sound insulation, vibration-proofing materials, shock absorbers and fillers for such purposes as to protect against dust, thermally insulate, acoustically insulate, vibration-proof, absorb shocks, make watertight or make airtight. The thickness of the sealing material may be set according to the intended application, although a thickness of from 3 to 50 mm is preferred.

### EXAMPLES

The invention is illustrated more fully below by way of Examples, although the invention is not limited by the following Examples.

### [Examples 1 to 3, Comparative Examples 1 to 10]

In each of the compounding formulations shown in Tables 1 and 2, the compounding ingredients other than the foaming agent, co-foaming agent, vulcanizing agent and vulcanizing accelerators were kneaded using a kneader at 120°C for 8 minutes. Next, after cooling the kneaded mixture to a surface temperature of 20°C, the foaming agent, co-foaming agent, vulcanizing agent and vulcanizing accelerators were also added according to the compounding formulations shown in Table 1 and kneading was carried out with a kneader at 80°C for 5 minutes. The resulting kneaded mixture was then formed into a sheet using a rubber extruder, following which the sheet was placed in a heating oven, where vulcanization and expansion were carried out at 140°C for 80 minutes, thereby giving a sealing material made of rubber foam having a closed-cell structure.

The EPDM1, EPDM2 and EVA in Table 1 were as follows.

- EPDM1:: Available from Sumitomo Chemical Co., Ltd. under the product name 501A; ethylene content, 52 wt %; diene (5-ethylidene-2-norbornene) content, 5 wt %
- EPDM2:: Available from Mitsui Chemicals, Inc. under the product name EPT3045H; ethylene content, 56 wt %; diene (5-ethylidene-2-norbornene) content, 5 wt %
- EVA:: Melting point, 71°C; melt flow rate, 18 g/10 min; vinyl acetate content, 28 wt %

The properties of the sealing materials thus produced were measured by the following methods. The results are shown in Tables 1 and 2.

### i) Density

The density of the sealing material was measured in accordance with JIS K 7222 using a thickness gauge (dial thickness gauge, from Teclock Corporation) and a balance (digital balance, from Shimadzu Corporation).

### ii) Number of Cells

The number of cells in the sealing material was measured in accordance with JIS K 6767 (1999).

### iii) Stress under 50% Compression

The stress under 50% compression in the thickness direction of the sealing material was measured using a hardness tester (Autograph, from Shimadzu Corporation) in accordance with JIS K 6767 (1000). In the "Stress under 50% Compression" columns of Tables 1 and 2, (A), (B), (C) and (D) respectively indicate the following.

(A): 45 to 65 kPa
(B): 45 to 70 kPa (excluding the range of (A))
(C): 0.5 to 100 kPa (excluding the ranges of (A) and (B))
(D): more than 100 kPa

### iv) Water-Stopping Ability

As shown in FIG. 1, the sealing material was die-cut into U-shaped samples S₁ having a thickness (a) of 10 mm, a width (e) of 10 mm, a height (f) of 130 mm, and an interval (g) between both ends of 45 mm. As shown in FIG. 2, the samples were compressed 60% in the thickness direction between two acrylic plates 2 and 3, the "U" portion was filled with water to a height of 100 mm, and the time until water leaked out was measured.

### v) Water-Stopping Ability Following Heat-Resistance Test

The sealing material was left to stand for 24 hours in an 80°C, 0% RH atmosphere, following which the water-stopping ability was evaluated in the same way as described above. In the "U-Shaped Water-Stopping Test" columns of Tables 1 and 2, (A), (B), (C) and (D) respectively indicate the following.

(A): No leakage of water for at least 24 hours
(B): No leakage of water for at least 8 hours
(C): No leakage of water for 3 to 8 hours
(D): No leakage of water for less than 3 hours

**[Table 1]**

| | | | Comparative Example | | | | | |
|---|---|---|---|---|---|---|---|---|
| | | | 1 | 2 | 3 | 4 | 5 | 6 |
| Compounding formulation | Rubber ingredients | EPDM1 | 100 | 100 | 100 | 100 | 100 | 100 |
| | | EPDM2 | 0 | 0 | 0 | 0 | 0 | 0 |
| | Thermoplastic resin | EVA | 5.0 | 5.0 | 5.0 | 5.0 | 5.0 | 5.0 |
| | Foaming agent | Azodicarbonamide | 17.0 | 19.0 | 21.2 | 21.2 | 21.2 | 21.2 |
| | Vulcanizing agent | Sulfur | 1.35 | 1.35 | 1.35 | 1.35 | 1.35 | 1.35 |
| | Fillers | Carbon black | 20 | 20 | 20 | 20 | 20 | 20 |
| | | Calcium carbonate | 150 | 150 | 150 | 150 | 150 | 150 |
| | Vulcanizing accelerators | Thiazole-type | 0.7 | 0.7 | 0.7 | 0.7 | 0.7 | 0.7 |
| | | Dithiocarbamate-type | 1.1 | 1.1 | 1.1 | 1.1 | 1.1 | 1.1 |
| | | Thiourea-type | 0.5 | 0.5 | 0.5 | 0.5 | 0.5 | 0.5 |
| | | Dithiophosphite-type | 1.0 | 1.0 | 1.0 | 1.0 | 1.0 | 1.0 |
| | Foaming regulator | Stearic acid | 1.5 | 1.5 | 1.5 | 1.5 | 2.5 | 3.6 |
| | Additive | Calcium oxide | 8.0 | 8.0 | 8.0 | 7.0 | 8.0 | 8.0 |
| | (Stearic acid)/(Calcium oxide) | | 0.19 | 0.19 | 0.19 | 0.21 | 0.31 | 0.45 |
| Formulation properties | Mooney viscosity (100°C, ML₁₊₄) | | 16.8 | 15.9 | 13.1 | 12.5 | 12.9 | 12.5 |
| Sealing material properties | Density (g/cm³) | | 136 | 121 | 98 | 90 | 105 | 120 |
| | Number of cells (cells/inch) | | 102 | 85 | 54 | 48 | 90 | 115 |
| | Stress under 50% compression (kPa) | | 102 (D) | 84 (C) | 75 (C) | 67 (B) | 65 (A) | 63 (A) |
| U-Shaped water-stopping test of sealing material (10%/100 mm water height) | | Before heat resistance test | A | B | D | D | C | A |
| | | After heat resistance test (80°C, 24 h) | B | B | D | D | C | A |

**[Table 2]**

| | | | Comparative Example | | | Example | | | Comp. Ex. |
|---|---|---|---|---|---|---|---|---|---|
| | | | 7 | 8 | 9 | 1 | 2 | 3 | 10 |
| Compounding formulation | Rubber ingredients | EPDM1 | 100 | 100 | 0 | 100 | 100 | 100 | 100 |
| | | EPDM2 | 0 | 0 | 100 | 0 | 0 | 0 | 0 |
| | Thermoplastic resin | EVA | 5.0 | 5.0 | 5.0 | 5.0 | 5.0 | 5.0 | 0 |
| | Foaming agent | Azodicarbonamide | 21.2 | 21.2 | 17 | 21.2 | 21.2 | 21.2 | 21.2 |
| | Vulcanizing agent | Sulfur | 1.35 | 1.35 | 1.05 | 1.35 | 1.35 | 1.1 | 1.35 |
| | Fillers | Carbon black | 20 | 20 | 40 | 20 | 20 | 25 | 20 |
| | | Calcium carbonate | 150 | 150 | 150 | 150 | 150 | 150 | 150 |
| | Vulcanizing accelerators | Thiazole-type | 0.7 | 0.7 | 0.5 | 0.7 | 0.7 | 0.5 | 0.7 |
| | | Dithiocarbamate-type | 1.1 | 1.1 | 2 | 1.1 | 1.1 | 1.0 | 1.1 |
| | | Thiourea-type | 0.5 | 0.5 | 0.5 | 0.5 | 0.5 | 0.6 | 0.5 |
| | | Dithiophosphite-type | 1.0 | 1.0 | 1.0 | 1.0 | 1.0 | 1.0 | 1.0 |
| | Foaming regulator | Stearic acid | 5.0 | 3.6 | 1.5 | 3.6 | 3.6 | 4 | 3.6 |
| | Additive | Calcium oxide | 8.0 | 2.0 | 5.0 | 7.0 | 5.0 | 7 | 7 |
| | (Stearic acid)/(Calcium oxide) | | 0.63 | 1.80 | 0.30 | 0.51 | 0.72 | 0.57 | 0.51 |
| Formulation properties | Mooney viscosity (100°C, ML₁₊₄) | | 12.3 | 10.7 | 22.3 | 12.9 | 12.4 | 13.2 | 13.4 |
| Sealing material properties | Density (g/cm³) | | 131 | 87 | 126 | 98 | 90 | 107 | 97 |
| | Number of cells (cells/inch) | | 112 | 72 | 121 | 113 | 100 | 105 | 110 |
| | Stress under 50% compression (kPa) | | 61 (A) | 55 (A) | 89 (C) | 68 (B) | 61 (A) | 75 (C) | 69 (B) |
| U-Shaped water-stopping test of sealing material (10%/100 mm water height) | | Before heat resistance test | A | D | A | A | B | A | A |
| | | After heat resistance test (80°C, 24 h) | A | D | A | A | B | A | D |

### [Discussion]

In Comparative Examples 1 to 6, the amount of stearic acid included was less than 4 PHR, the amount of calcium oxide included was 7 or 8 PHR, and the (stearic acid)/(calcium oxide) ratio was less than 0.5. Hence, these Comparative Examples had the following drawbacks.

In Comparative Example 1, the density was high and the stress under 50% compression was also high. In Comparative Example 2, because the amount of foaming agent was made larger than in Comparative Example 1, the stress under 50% compression was low, but the decrease in density was inadequate. In addition, the number of cells was insufficient. In Comparative Examples 3 and 4, the amount of foaming agent was further increased, as a result of which the density was low, but the number of cells was small (i.e., the cell diameter was large, and so the cells were coarse), resulting in a poor water-stopping ability.

In Comparative Example 5, the amount of stearic acid included was increased to 2.5 PHR, yet the number of cells was not sufficiently large and the water-stopping ability was inadequate.

In Comparative Examples 6 and 7, the amount of stearic acid included was increased to 3.6 and 5.0 PHR, respectively, resulting in an increased number of cells and also enhancing the water-stopping ability. However, the calcium oxide content was high, in addition to which, in Comparative Example 7, owing in part to an excessive content of stearic acid, the density was high.

In Comparative Example 8, the content of calcium oxide was low and the (stearic acid)/(calcium oxide) value was 1.80, which is very high. Hence, in Comparative Example 8, the number of cells was low and the water-stopping ability was poor.

Comparative Example 9 had a low amount of stearic acid and a high Mooney viscosity. Hence, in Comparative Example 9, the density was high and the stress under 50% compression was also high.

In Comparative Example 10, because EVA was not added, the water-stopping ability following the heat-resistance test decreased.

In contrast with Comparative Examples 1 to 10, the sealing materials in Examples 1, 2 and 3 had a low density, a low stress under 50% compression (i.e., a low hardness), and a good water-stopping ability.

This invention has been described in detail using specific embodiments, although it will be apparent to persons skilled in the art that various modifications may be made thereto without departing from the intent and scope of the invention.

This application is based on Japanese Patent Application No. 2012-101172 filed on April 26, 2012, the entire contents of which are hereby incorporated by reference.

### EXPLANATION OF THE SYMBOLS

- S₁:: U-shaped sample
- 2, 3:: Acrylic plates

## Claims

1. A sealing material obtained by vulcanizing and expanding an intimate mixture comprising a rubber component containing a copolymeric rubber of ethylene, an α-olefin having 3 or more carbon atoms and a non-conjugated diene, a vulcanizing agent, a foaming agent and a thermoplastic resin, **characterized in that**
the intimate mixture includes from 2 to 4 parts by weight of stearic acid and from 5 to 7 parts by weight of calcium oxide per 100 parts by weight of the rubber component, and
the sealing material has a stress under 50% compression of 100 kPa or less and
wherein the ratio of the parts by weight of stearic acid to the parts by weight of calcium oxide is from 0.5 to 0.75.

2. The sealing material according to claim 1, wherein the thermoplastic resin is an ethylene-vinyl acetate copolymer.

3. The sealing material according to any one of claims 1 to 2, wherein the intimate mixture has a Mooney viscosity of from 10 to 20.

4. The sealing material according to any one of claims 1 to 3, wherein the foaming agent is azodicarbonamide.

## Patentansprüche

1. Dichtungsmaterial, das durch Vulkanisieren und Ausdehnen einer innigen Mischung erhalten wird, die eine einen copolymeren Kautschuk von Ethylen enthaltende Kautschukkomponente, ein α-Olefin, das 3 oder mehr Kohlenstoffatome und ein nicht konjugiertes Dien aufweist, eine Vulkanisiermittel, ein Schäumungsmittel und ein thermoplastisches Harz umfasst, **dadurch gekennzeichnet, dass**
die innige Mischung 2 bis 4 Gewichtsteile Stearinsäure und 5 bis 7 Gewichtsteile Calciumoxid pro 100 Gewichtsteile der Kautschukkomponente umfasst und
das Dichtungsmaterial eine Spannung unter 50 % Druck von 100 kPa oder weniger aufweist und
wobei das Verhältnis der Gewichtsteile von Stearinsäure zu den Gewichtsteilen von Calciumoxid 0,5 bis 0,75 beträgt.

2. Dichtungsmaterial nach Anspruch 1, wobei das thermoplastische Harz ein Ethylen-Vinylacetat-Copolymer ist.

3. Dichtungsmaterial nach einem der Ansprüche 1 bis 2, wobei die innige Mischung eine Mooney-Viskosität von 10 bis 20 aufweist.

4. Dichtungsmaterial nach einem der Ansprüche 1 bis 3, wobei das Schäumungsmittel Azodicarbonamid ist.

## Revendications

1. Matériau d'étanchéité obtenu par vulcanisation et expansion d'un mélange intime comprenant un composant de caoutchouc contenant un caoutchouc copolymère d'éthylène, une α-oléfine ayant 3 atomes de carbone ou plus et un diène non conjugué, un agent de vulcanisation, un agent d'expansion et une résine thermoplastique, **caractérisé en ce que**
le mélange intime inclut de 2 à 4 parties en poids d'acide stéarique et de 5 à 7 parties en poids d'oxyde de calcium pour 100 parties en poids du composant de caoutchouc, et
le matériau d'étanchéité présente une contrainte sous compression de 50 % de 100 kPa ou moins et
où le rapport des parties en poids de l'acide stéarique aux parties en poids de l'oxyde de calcium est de 0,5 à 0,75.

2. Matériau d'étanchéité selon la revendication 1, dans lequel la résine thermoplastique est un copolymère d'éthylène-acétate de vinyle.

3. Matériau d'étanchéité selon l'une quelconque des revendications 1 à 2, dans lequel le mélange intime présente une viscosité de Mooney de 10 à 20.

4. Matériau d'étanchéité selon l'une quelconque des revendications 1 à 3, dans lequel l'agent d'expansion est l'azodicarbonamide.
